# EUROPÄISCHE PATENTSCHRIFT

(11) **EP 2 643 377 B1**
(45) Veröffentlichungstag und Bekanntmachung des Hinweises auf die Patenterteilung: **01.10.2014**
(21) Anmeldenummer: 11788106.0
(22) Anmeldetag: 18.11.2011
(51) Int. Cl.: C08G 18/10, C08G 18/12, C08G 18/76, C08G 18/42, C08G 18/48

(54) **POLYURETHANELASTOMERFORMTEILE AUS DIPHENYLMETHANDIISOCYANAT BASIERTEN NCO-PREPOLYMEREN UND METALLSALZKOMPLEXEN UND EIN VERFAHREN ZU IHRER HERSTELLUNG**
MOLDED POLYURETHANE ELASTOMER PARTS MADE OF DIPHENYLMETHANE DIISOCYANATE-BASED NCO PREPOLYMERS AND METAL SALT COMPLEXES, AND A METHOD FOR PRODUCING SAME
PIÈCES MOULÉES EN ÉLASTOMÈRE DE POLYURÉTHANE FAITES DE PRÉPOLYMÈRES NCO À BASE DE DIPHÉNYLMÉTHANEDIISOCYANATE ET DE COMPLEXES DE SELS MÉTALLIQUES ET LEUR PROCÉDÉ DE FABRICATION

(30) Priorität: 23.11.2010 EP 10306284
(43) Veröffentlichungstag der Anmeldung: 02.10.2013
(73) Patentinhaber: Bayer Intellectual Property GmbH, 40789 Monheim (DE)
(72) Erfinder: KRAUSE, Jens, 51375 Leverkusen (DE)
(74) Vertreter: BIP Patents
(86) Internationale Anmeldenummer: PCT/EP2011/070423
(87) Internationale Veröffentlichungsnummer: WO 2012/069368

(56) Entgegenhaltungen:
- WO-A1-2007/087987
- WO-A2-2008/136788
- US-A1- 2008 146 765

## Beschreibung

Die vorliegende Erfindung betrifft neue Polyurethanelastomerformteile aus NCO-funktionellen, Diphenylmethandiisocyanat basierten Prepolymeren und mit Metallsalzen blockiertem Diphenylmethandiamin (MDA), im Folgenden auch als Komplexe des MDA bezeichnet, und ein Verfahren zu ihrer Herstellung.

MDI (Diphenylmethandiisocyanat) ist eine technisch wichtige Gruppe von Polyisocyanaten. Sie ist bezüglich ihres strukturellen Aufbaus sehr heterogen zusammengesetzt und umfasst Monomer-Typen, die dadurch gekennzeichnet sind, dass sie zwei aromatische Strukturelemente, verbunden über lediglich eine Methylenbrücke aufweisen, sowie höhere Oligomere, die mehr als zwei aromatische Strukturelemente und über mehr als eine Methylenbrücke verfügen, die als polymeres MDI bezeichnet werden.

Bei monomerem MDI überwiegen synthesebedingt die 4,4'- und 2,4'-Isomeren. Weniger häufig und technisch weitgehend wertlos tritt in untergeordnetem Ausmaß auch das 2,2'-Isomere auf.

Das Verhältnis von Monomer-MDI zu Polymer-MDI sowie die Anteile der 2,4'- und 4,4'-Isomeren im Monomer-MDI kann durch Variation der Synthesebedingungen bei der Herstellung der Amin-Vorstufe in weiten Grenzen variiert werden.

Die Auftrennung des bei der MDI-Synthese anfallenden Roh-MDIs erfolgt in weiten Teilen destillativ, wobei je nach technischem Aufwand sowohl fast isomerenreine Fraktionen mit Anteilen z.B. an 4,4'-MDI von größer 97,5 Gew.-% oder auch Isomeren-Gemische mit 4,4'- und 2,4'-Anteilen von etwa je 50 Gew.-% abgetrennt werden können. Kommerziell erhältliche Mischungen enthalten maximal 60 Gew.-% 2,4'-MDI.

Reines 2,4'-Isomeres wird durch ein spezielles Destillationsverfahren gewonnen. Bevorzugt wird 2,4'-MDI mit geringem Anteil an 2,2'-MDI nach dem Verfahren gemäß EP-A 1 561 746 hergestellt und eingesetzt.

Komplexe des MDA (Diphenylmethandiamin) sind von DuPont im Jahre 1973 beschrieben worden. Ein Vorteil dieser Komplexe (blockiertes MDA) ist, dass sie erst bei einer bestimmten Temperatur beispielsweise mit Isocyanaten reagieren (Thermolatenz). Somit können lagerstabile Reaktionsgemische erhalten werden, die erst nach mehreren Stunden oder sogar Tagen verarbeitet werden können, sofern bestimmte Temperaturen bei der Lagerung nicht überschritten werden. Erst wenn diese Temperatur überschritten wird, kommt es zum Aushärten des Reaktionsgemisches.

Ein großer Nachteil bei Einsatz derartiger blockierter Amine zur Herstellung von Polyurethanen ist jedoch, dass dickwandige Teile nicht durchhärten, so dass nur Polyurethanbeschichtungen (beispielsweise durchtränkte Textilgewebe) von < 5 mm Dicke hergestellt werden können. Typische Gießelastomerprodukte, wie beispielsweise Siebe, Räder oder Walzen, mit Wandstärken von > 10 mm können nicht hergestellt werden, da das Reaktionsgemisch nicht vollständig aushärtet. Vorzugsweise härten derartige Reaktionsgemische nur im direkten Kontakt mit der Form, welche typischerweise die höchste Temperatur aufweist, in einer Schicht von 1-2 mm aus. Dies erklärt, warum bisher nur Beschichtungen mit Dicken < 5 mm hergestellt wurden. Es wird vermutet, dass die mangelnde Aushärtung an dem hohen Anteil an freiem, unreagiertem Isocyanat in den NCO-Prepolymeren liegt. Große Anstrengungen wurden seitdem unternommen, dieses Problem zu lösen. Es wurde daher versucht, monomerenarme NCO Prepolymere herzustellen. Die gängige Praxis besteht hierbei jedoch nicht darin, dass ein typisches NCO-Prepolymer wie üblich hergestellt wird und dann das freie unreagierte Isocyanat aus dem NCO-Prepolymer destillativ entfernt wird. Derartige monomerenarme NCO-Prepolymere wären viel zu hoch viskos. Daher werden monomerenarme NCO-Prepolymere über eine andere Technik gewonnen. Im Falle der Herstellung eines nicht monomerenarmen NCO Prepolymers werden wie allgemein bekannt Isocyanat und Polyol miteinander umgesetzt, wobei der Anteil des freien, nicht reagierten Isocyanats im Falle des Einsatzes von MDI als Isocyanat üblicherweise bei mindestens 5 Gew.-% im NCO-Prepolymer liegt. Die Kennzahl (das Verhältnis von NCO-Gruppen zu OH-Gruppen) liegt typischerweise zwischen 1,5 und 3. Im Falle der Herstellung von monomerenarmen NCO-Prepolymeren wird hingegen zunächst ein Zwischenprodukt ("NCO-Prepolymer") aus Isocyanat und Polyol, das einen extrem hohen Überschuss an freiem Isocyanat aufweist, hergestellt. Die Kennzahl dieses Zwischenproduktes liegt typischerweise zwischen 5 und 8. Das deutlich im Überschuss vorhandene freie Isocyanat wird dann in einem zweiten Schritt destillativ entfernt. Nicht nur die Verfahren zur Herstellung von monomerenarmen und nicht monomerenarmen NCO-Prepolymeren sind unterschiedlich, sondern auch die Zusammensetzungen der jeweiligen NCO-Prepolymeren und ihre Eigenschaften.

Ein typischer Aufbau im Falle der monomerenarmen NCO-Prepolymere besteht aus dem Umsetzungsprodukt von zwei Isocyanaten A und einem Polyol B, also ABA. Auf Grund des hohen Überschusses an Isocyanat (hohe Kennzahl) zu Polyol ist die Wahrscheinlichkeit des Aufbaus größerer Einheiten wie beispielsweise ABABA sehr gering. In diesen monomerenarmen NCO-Prepolymeren liegen nur ABA-Einheiten vor, so dass die OH-Zahl des Polyols B den NCO-Gehalt des Prepolymeren bestimmt. Die Variation der Eigenschaften derartiger NCO-Prepolymere ist somit eingeschränkt

Nicht monomerenarme NCO-Prepolymere (auch Chargen-, Batch- oder nicht gedünnschichtete Prepolymere genannt) weisen hingegen eine Verteilung aus ABA, ABABA, ABABABA, usw. sowie freies Isocyanat A auf. Da nur ein geringer Überschuss an Isocyanat zu Polyol (Kennzahl von 1,5-3) bei der Herstellung von nicht monomerenarmen NCO-Prepolymeren vorliegt, kommt es zu einer sogenannten Vorverlängerung (ABA reagiert mit einem weiteren Polyol B, welches anschließend mit weiterem Isocyanat A reagiert, so dass dann ABABA vorliegt). Eine Übersicht über den Aufbau derartiger NCO-Prepolymere findet sich in US2008/0146765.

Typische Techniken zur Entfernung von freiem Isocyanat aus NCO-Prepolymeren sind Fallfilm-, Dünnschicht- sowie Schleppmitteldestillation (Schleppmittel: Gas und/oder Lösungsmittel) im Vakuum, Lösungsmittelextraktion, Membranfiltration und die Entfernung über molekulare Siebe. Die gängigste Technik ist die Dünnschichtdestillation. Diese Destillationen wurden aufgrund des Dampfdruckes des Toluylendiisocyanates (TDI) anfangs nur bei auf TDI-basierten NCO-Prepolymeren angewendet. Dabei ist jedoch ein großer Nachteil, dass die erhaltenen Polyurethane aus Umsetzung von MDA-Komplexen mit dem NCO-Prepolymer deutlich schlechtere mechanische Eigenschaften besitzen als die entsprechenden Polyurethane aus über Dünnschicht destillierten NCO-Prepolymeren, welche mit klassischen aminischen, unblockierten Vernetzern (wie z.B. 4,4'-Methylenbis(2-chloroanilin (MOCA) oder Butandiol) gehärtet werden (US2008/0146765). Allerdings können bei der Umsetzung von monomerenarmen Prepolymeren auf Basis TDI mit MDA Komplexen großwandige Elastomerteile hergestellt werden.

Die Triebkraft zur Herstellung von monomerarmen bis zu praktisch monomerfreien NCO-Prepolymeren liegt - neben den oben erwähnten Problemen bei der Reaktion mit Komplexen des MDA - im Falle von 2,4/2,6-TDI in dessen hohem Dampfdruck und den damit einhergehenden gesundheitlichen Gefahren begründet. Noch kritischer sind in diesem Zusammenhang die auf aliphatischen Diisocyanaten, z.B. Hexamethylendiisocyanat (HDI) oder Isophorondiisocyanat (IPDI), basierenden NCO-Prepolymere zu sehen. Prinzipiell ist dieser Aspekt der Gesundheitsgefährdung auch bei MDI vorhanden, jedoch auf Grund seines im Vergleich zu TDI geringeren Dampfdruckes in deutlich vermindertem Ausmaß. Zudem steht MDI im Gegensatz zu TDI nicht im Verdacht krebserregend zu sein. Da die Komplexe des MDA nicht ausreichend mit nicht von monomeren Isocyanaten befreiten Prepolymeren reagieren, müssen auch in diesem Fall die NCO-Prepolymeren auf Basis von MDI mittels Dünnschichtdestillation behandelt werden (US2008/0146765). Erst durch die Dünnschichtdestillation der 4,4'-MDI-basierten NCO-Prepolymere und deren anschließende Umsetzung mit blockiertem MDA können Polyurethane mit vergleichbaren oder besseren Eigenschaften erhalten werden (US2008/0146765).

Der freie Isocyanatanteil bei NCO-Prepolymeren auf Basis von 4,4'-MDI, die nicht einer Dünnschichtdestillation unterworfen werden, liegt bei über 5 %. Ein niedrigerer Anteil an freiem Isocyanat ist jedoch nicht möglich, da die Viskosität des Prepolymeren für eine Weiterverarbeitung viel zu hoch wäre. Somit muss auf monomerenarme NCO-Prepolymere mit einer ABA Struktur (Isocyanat-Polyol-Isocyanat) ausgewichen werden. Nicht monomerenarme NCO-Prepolymere mit einem niedrigeren Gehalt an freiem Isocyanat und vielen Segmenten in der Prepolymer-Struktur (z.B. ABABA) hätten viel zu hohe Viskositäten.

Der große Nachteil der Herstellung von monomerenarmen, MDI basierten NCO-Prepolymeren ist der hohe Schmelzpunkt des 4,4'-MDI. Um diesen Nachteil zu vermeiden, wurden toxische Lösungsmittel, wie Dioctylphthalat als Schleppmittel zugesetzt (US2008/0146765), um den Schmelzpunkt zu erniedrigen, damit das 4,4'-MDI bei der Dünnschichtdestillation nicht auskristallisiert. Eine andere Alternative wäre gewesen, den Destillatbehälter statt auf Raumtemperatur oberhalb des Schmelzpunktes von MDI (also über 40°C) zu betreiben, dann hätte aber im Gegenzug die Destillationsanlage bei 140°C besser bei 160°C betrieben werden müssen, was zu einer Zersetzung des NCO-Prepolymers geführt hätte (US2008/0146765). Auch enthalten die NCO-Prepolymere anschließend immer Reste des Lösungsmittels (etwa 0,1-0,2 Gew.-%). Derartige lösungsmittelhaltigen NCO-Prepolymere sind jedoch unerwünscht. Ein weiterer Nachteil der Dünnschichtdestillation sind die hohen Kosten, da es sich um ein energieaufwendiges Verfahren handelt. Auch sind die Anlagen sehr aufwendig, so dass eine Produktion nur an entsprechend ausgerüsteten Standardorten mit hohen Investitionen möglich ist. Ein weiterer großer Nachteil ist die Anfälligkeit der komplexen Anlagen. Ein großer Nachteil ist auch, dass es sich um kontinuierliche Anlagen handelt. Während monomerenhaltige NCO-Prepolymere normalerweise im Rührkesselverfahren hergestellt werden, muss bei Einsatz von Dünnschichtanlagen, auf Grund der Dosierung über Vakuumverdampfer, kontinuierlich gearbeitet werden. Eine Dünnschichtanlage ist ungefähr 50-250 fach teurer als eine Rührkesselanlage.

Mit den zurzeit zur Verfügung stehenden monomerenarmen NCO-Prepolymeren auf Basis 4,4'-MDI oder monomerenarmen NCO-Prepolymeren auf Basis TDI können keine Produkte hergestellt werden, die über den gesamten Bereich ähnliche Eigenschaften aufweisen, da beispielsweise die Härte im Zentrum im Vergleich zur Oberfläche des Produktes (Polyurethanelastomer) variiert.

Monomerenhaltige NCO-Prepolymere auf Basis 4,4'-MDI weisen zu hohe Viskositäten auf und können auf Grund ihrer hohen Reaktivitäten nur mit Diolen vernetzt werden. Eine Vernetzung mit Diaminen, wie z.B. MOCA (4,4'-Methylenbis(2-chloroanilin) oder Ethacure^{®} 300 (Isomerenmischung aus 3,5-dimethylthio-2,6-toluoldiamin und 3,5-dimethylthio-2,4-toluoldiamin) wäre viel zu reaktiv. NCO-Prepolymere auf Basis TDI oder 2,4'-MDI können zwar ohne Dünnschichtdestillation mit Aminen in vertretbar langen Verarbeitungszeiten von >1 Minute zu Elastomeren vernetzt werden, allerdings sind die entsprechenden Reaktionsmischungen aus NCO-Prepolymer und Vernetzer nicht ausreichend lagerstabil.

Aufgabe war es daher, ein Polyurethansystem zur Verfügung zu stellen, welches gleichzeitig eine lange Lagerstabilität der Polyurethanreaktionsmischung und damit lange Topfzeiten aufweist, mit dem gleichzeitig dickwandige Teile hergestellt werden können und mit dem auf eine kostenintensive Dünnschichtdestillation verzichtet werden kann. Gleichzeitig sollte auf Systeme auf Basis von TDI verzichtet werden. Außerdem sollte das Polyurethansystem zu Produkten führen, die keine bzw. nur geringfügige Unterschiede in ihren physikalischen Eigenschaften über das gesamte hergestellte dickwandige Polyurethanprodukt aufweisen ("Homogenität des Produktes"). Auch sollten die Ausgangsmaterialien eine niedrige Verarbeitungsviskosität, so dass blasenfreie Produkte bzw. Elastomere ohne Vermischungsstörungen erhalten werden, und die daraus hergestellten Polyurethanprodukte ein hohes Eigenschaftsniveau aufweisen. Es sollte auch möglich sein, mit den Ausgangsmaterialien ein breites Spektrum an maßgeschneiderten Polyurethanelastomeren mit guten Endeigenschaften herzustellen.

Überraschend konnte die Aufgabe durch Polyurethanformteile auf Basis von 2,4'-MDI-Prepolymeren und MDA Komplexen gelöst werden.

Gegenstand der vorliegenden Erfindung sind nach dem Gießverfahren erhältliche Polyurethanelastomerformteile erhältlich durch Umsetzung von
a) NCO-Prepolymeren mit einer Viskosität bei 80°C von < 3000 mPas, mit einem NCO-Gehalt von 3 bis 7 Gew.-% und mit einem Anteil an freiem monomerem 2,4'-Diphenylmethandiisocyanat von 1 Gew.-% bis 6 Gew.-%, vorzugsweise 1 bis 5 Gew.-%, bezogen auf das NCO-Prepolymer, erhältlich durch Umsetzung von Diphenylmethandiisocyanat mit einem 2,4'-Isomerengehalt von mindestens 95 Gew.-%, bevorzugt mindestens 97,5 Gew.-%, und Polyolen mit OH-Zahlen von 50 bis 180 mg KOH/g und einer Funktionalität von 2, wobei die Kennzahl (Verhältnis von NCO-Gruppen zu OH-Gruppen) 1,6:1 bis 2,1:1 beträgt, mit
b) Komplexen aus 4,4'-Diaminodiphenylmethan (MDA) und Metallsalzen
   in Gegenwart von
c) gegebenenfalls Hilfs- und Zusatzstoffen und
d) gegebenenfalls Weichmachern.

Das erfindungsgemäß eingesetzte NCO-Prepolymer ist nicht monomerenarm. Es enthält einen hohen Anteil an Prepolymeren mit ABABA- und entsprechend höheren Strukturen (A=Isocyanat und B=Polyol)

Das für die Herstellung des Prepolymers eingesetzte Diphenylmethandiisocyanat (MDI) besteht zu mindestens 95 Gew.-% aus 2,4'-MDI. Der Rest sind 4,4'-MDI und 2,2'-MDI.

Unter 2,4'-MDI wird im Folgenden monomeres MDI verstanden, das einen Gehalt an 2,4'-Isomerem von mindestens 95 Gew.-%, besonders bevorzugt von mindestens 97,5 Gew.-% aufweist.

Die aus den vorgenannten Ausgangsverbindungen a) und b) abgemischten Reaktionsgemische sind bei 70°C und niedrigeren Temperaturen mindestens 1 Monat fließfähig bzw. lagerstabil.

Bevorzugt handelt es sich bei den Polyolen um Polytetramethylenglykole, Polycaprolactone, Polyadipate und deren Gemische, wobei besonders bevorzugt Polytetramethylenglykole mit zahlenmittleren Molmassen von 650 g/mol bis 1400 g/mol, Polycaprolactonepolyole mit zahlenmittleren Molmassen von 800 bis 1700 g/mol, Polyadipate mit zahlenmittleren Molmassen von 700 bis 2000 g/mol und deren Gemische eingesetzt werden.

Bei den Komplexen handelt es sich bevorzugt um Komplexe aus Metallhalogeniden, besonders bevorzugt aus Natriumchlorid und MDA.

Als besonders bevorzugter Komplex wird ein Komplex auf Basis von 4,4'-MDA mit NaCl in Dioctyladipat eingesetzt, wobei der Komplex einen Anteil an nicht komplexiertem 4,4'-MDA von < 0,5 % aufweist.

Überraschenderweise zeigten die erfindungsgemäßen Polyurethanformteile eine homogene Verteilung der Eigenschaften über den ganzen Körper.

Ein weiterer Gegenstand der Erfindung ist ein Verfahren zur Herstellung von Polyurethanelastomerformteilen nach dem Gießverfahren, wobei
(i) in einem ersten Schritt
   a) NCO-Prepolymere mit einer Viskosität bei 80°C von < 3000 mPas, mit einem NCO-Gehalt von 3 bis 7 Gew.-% und mit einem Anteil an freiem monomerem 2,4'-Diphenylmethandiisocyanat von 1 Gew.-% bis 6 Gew.-%, vorzugsweise 1 bis 5 Gew.-%, bezogen auf das NCO-Prepolymer, erhältlich durch Umsetzung von Diphenylmethandiisocyanat mit einem 2,4'-Isomerengehalt von mindestens 95 Gew.-%, bevorzugt mindestens 97,5 Gew.-%, und Polyolen mit OH-Zahlen von 50 bis 180 mg KOH/g und einer Funktionalität von 2, wobei die Kennzahl (Verhältnis der NCO-Gruppen zu den OH-Gruppen) 1,6:1 bis 2,1:1 beträgt, und
   b) Komplexe aus 4,4'-Diaminodiphenylmethan (MDA) und Metallsalzen sowie
   c) gegebenenfalls Hilfs- und Zusatzstoffe und
   d) gegebenenfalls Weichmacher miteinander vermischt werden,
(ii) gegebenenfalls das unter Schritt (i) erhaltene Reaktionsgemisch bei Temperaturen von 70°C oder darunter gelagert wird,
(iii) das Reaktionsgemisch in eine Form gegeben wird,
(iv) das Reaktionsgemisch bei Temperaturen über 80°C, bevorzugt über 100°C, besonders bevorzugt über 110°C, bis höchstens 160°C, vorzugsweise bis höchstens 150°C zum Polyurethan ausgehärtet wird,
(v) das ausgehärtete Polyurethan aus der Form entnommen wird.

Die Kennzahl ist definiert als das Verhältnis von NCO- zu OH- bzw. NH2-Gruppen. Die Stöchiometrie ist das Verhältnis von OH- bzw. NH2-Gruppen zu NCO-Gruppen. Neben der Prepolymer-Kennzahl und -Stöchiometrie gibt es die Elastomer-Kennzahl und -Stöchiometrie. Die Elastomer-Stöchiometrie ist das Verhältnis von OH- bzw. NH2-Gruppen des Vernetzungsmittels zu den NCO-Gruppen des Prepolymers. Die Elastomer-Kennzahl ist das Verhältnis von NCO- Gruppen des Prepolymers zu den OH-Gruppen bzw. NH2-Gruppen des Vernetzungsmittels.

Als Polyole können Polyether-, Polyester-, Polycaprolacton-, Polycarbonat- und Polyetheresterpolyole mit Hydroxylzahlen von 50 bis 180 mg KOH/g eingesetzt werden. Bevorzugt werden Polyole mit einer Funktionalität von 2 eingesetzt.

Polyetherpolyole werden beispielsweise mittels alkalischer Katalyse oder mittels Doppelmetallcyanidkatalyse oder gegebenenfalls bei stufenweiser Reaktionsführung mittels alkalischer Katalyse und Doppelmetallcyanidkatalyse aus einem Startermolekül und Epoxiden, bevorzugt Ethylen- und/oder Propylenoxid hergestellt und weisen endständige Hydroxylgruppen auf. Als Starter kommen hierbei die dem Fachmann bekannten Verbindungen mit Hydroxyl- und/oder Aminogruppen, sowie Wasser in Betracht. Die Funktionalität der Starter beträgt hierbei mindestens 2 und höchstens 4. Selbstverständlich können auch Gemische von mehreren Startern verwendet werden. Des Weiteren sind als Polyetherpolyole auch Gemische von mehreren Polyetherpolyolen einsetzbar.

Des Weiteren können als Polyetherpolyole hydroxyl-terminierte Oligomere von Tetrahydrofuran verwendet werden, so genannte Poly C4-Ether/Polytetrahydrofurane/Polytetramethylenglykole. Diese werden meist sauer katalysiert hergestellt.

Polyesterpolyole werden in an sich bekannter Weise durch Polykondensation aus aliphatischen und/oder aromatischen Polycarbonsäuren mit 4 bis 16 Kohlenstoffatomen, gegebenenfalls aus deren Anhydriden sowie gegebenenfalls aus deren niedermolekularen Estern, inklusive Ringestern hergestellt, wobei als Umsetzungskomponente überwiegend niedermolekulare Polyole mit 2 bis 12 Kohlenstoffatomen zum Einsatz kommen. Die Funktionalität der Aufbaukomponenten für Polyesterpolyole liegt hierbei bevorzugt bei 2. Polyetheresterpolyole werden durch Mitverwendung von Polyetherpolyolen bei der Polyesterpolyolsynthese hergestellt. Polycarbonatpolyole werden entsprechend dem Stand der Technik aus Kohlensäurederivaten, z.B. Dimethyl- oder Diphenylcarbonat oder Phosgen und Polyolen mittels Polykondensation erhalten.

Unter MDA Komplexen werden Verbindungen verstanden, wie sie in US 3,755,261, US 3,876,604, US 4,029,730 sowie US2008/014765 beschrieben sind. Hierbei handelt es sich um Umsetzungsprodukte aus MDA mit Metallsalzen, wie z.B. Natriumchlorid, Natriumbromid, Natriumiodid, Lithiumchlorid, Lithiumbromid, Lithiumiodid sowie Natriumcyanid. Ebenfalls beschrieben sind Pseudohalogenide. Bevorzugt handelt es sich um Metallsalz-Komplexe des MDA, besonders bevorzugt um Metallhalogenid-Komplexe des MDA. Ganz besonders bevorzugt werden Komplexe auf 4,4'-MDA Basis verwendet, wobei besonders bevorzugt Natriumchlorid-Komplexe verwendet werden. Dieser liegt als MDA*3NaCl Komplex vor. Üblicherweise liegen die Komplexe als Dispersionen, z.B. in Weichmachern, wie beispielsweise Dioctylphthalat oder Dioctyladipat vor. Bevorzugt werden Komplexe mit einem geringen Anteil an freiem (nicht komplexiertem) MDA verwendet. Gegebenfalls wird das freie MDA durch bekannte Techniken (Umkristallisieren, Filtration, Dünnschichten, Extraktion, etc.) entfernt. Kommerziell sind derartige Komplexe von der Firma Chemtura unter der Marke Caytur^{®} oder Duracure™ erhältlich.

Weiterhin können Hilfs- und Zusatzstoffe, wie etwa Katalysatoren, Stabilisatoren, UV-Schutzmittel, Hydrolyseschutzmittel, Silikone, Emulgatoren, bevorzugt einbaufähige Farbstoffe sowie Farbpigmente eingesetzt werden.

Beispiele für Katalysatoren sind Trialkylamine, Diazabicyclooctan, Zinndioctoat, Dibutylzinndilaurat, N-Alkylmorpholin, Blei-, Zink-, Kalzium-, Magnesiumoctoat, die entsprechenden Naphthenate und p-Nitrophenolat.

Neben den bekannten Katalysatoren wird die Reaktion zwischen dem Prepolymer und dem MDA Komplex durch polare Verbindungen, wie z.B. Glyzerin oder Harnstoff katalysiert. Diese speziellen Katalysatoren katalysieren nicht die Reaktion zwischen den NCO- und NH₂-Gruppen, sondern schwächen die Blockierung des MDA durch das Metallsalz, so dass der Komplex bereits bei niedrigen Temperaturen reagieren kann.

Als Weichmacher können beispielsweise Verbindungen wie Phthalate (z.B. Dibutylphthalate, Diisononylphthalate), Trimellitate, Adipate (z.B. Dioctyladipate), Organophosphate (z.B. Tributylphosphate), Chlor- und/oder Bromphosphate, Carbonate (z.B. Propylencarbonat), Lactone (z.B. Butyrolacton) oder ähnliche eingesetzt werden.

Beispiele für Stabilisatoren sind Broenstedt- und Lewis-Säuren, wie z.B. Salzsäure, Benzoylchlorid, Organomineralsäuren, z.B. Dibutylphosphat, weiterhin Adipinsäure, Äpfelsäure, Bernsteinsäure, Traubensäure oder Zitronensäure.

Silikone werden oftmals zum Entgasen und/oder als Abriebreduzierer zugesetzt. Gängige Additive sind z.B. von den Firmen Byk (Altana) oder Evonik (Tegostab, Ortegol, o. ä.) erhältlich.

Beispiele für UV-Schutzmittel und Hydrolyseschutzmittel sind 2,6-Dibutyl-4-methylphenol und sterisch gehinderte Carbodiimide.

Einbaufähige Farbstoffe sind solche, die über zerewitinoff-aktive Wasserstoffatome verfügen, also mit NCO-Gruppen reagieren können.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2nd edition, Carl Hanser Verlag, München, 1994, Kap. 3.4., enthalten.

Die erfindungsgemäßen Polyurethanelastomere können in den unterschiedlichsten Bereichen zum Einsatz kommen: beispielsweise als elastische Formteile, die nach dem Gießverfahren hergestellt werden. Typische Anwendungen sind beispielsweise Siebe, Rollen und Räder, Walzen und Hydrozyklone.

Neben der thermischen Aushärtung zum Elastomer unter Verfahrensschritt (iv) ist auch die mikrowellenbasierte Aushärtung möglich.

Die Erfindung soll anhand der nachfolgenden Beispiele näher erläutert werden.

### Beispiele

Verwendete Meßmethoden:

| Eigenschaft | Dimension | Norm |
|---|---|---|
| Härte | [Shore] | ISO 868 |
| Spannung | [MPa] | DIN 53504 |
| Reißspannung | [MPa] | DIN 53504 |
| Reißdehnung | [%] | DIN 53504 |
| Weiterreißwiderstand | [kN/m] | DIN 53515 |
| Abrieb | [mm³] | DIN 53516 |
| Dichte | [g/mm³] | ISO 1183 |
| Druckverformungsrest, DVR | [%] | ISO 815 |
| Viskosität | mPas | ISO 3219/A.3 |
| NCO-Gehalt | Gew.-% | ISO 11909 |

### Verwendete Ausgangsmaterialien:

- Polyol 1: Polytetramethylenglykol (von der Firma Invista, Terathane^{®} 650) Molgewicht 650 g/mol, nominale Funktionalität 2,0, OH-Zahl 173 mg KOH/g
- Polyol 2: Polytetramethylenglykol (von der Firma Invista, Terathane^{®} 1000) Molgewicht 1000 g/mol, nominale Funktionalität 2,0, OH-Zahl 112 mg KOH/g
- Polyol 3: Polycaprolactonpolyol (von der Firma Perstop, Capa 2101A) Molgewicht 1000 g/mol, nominale Funktionalität 2,0, OH-Zahl 112 mg KOH/g
- Polyol 4: Polycaprolactonpolyol (von der Firma Perstop, Capa 2201A) Molgewicht 2000 g/mol, nominale Funktionalität 2,0, OH-Zahl 56 mg KOH/g
- Isocyanat 1:: 4,4'-Diphenylmethandiisocyanat (Desmodur^{®} VP.PU 0118B der Firma Bayer MaterialScience AG) mit 98,5 Gew.-% 4,4'-Isomeranteil
- Isocyanat 2:: 2,4'-Diphenylmethandiisocyanat (Desmodur^{®} 24 MI der Firma Bayer MaterialScience AG) mit 99,0 Gew.-% 2,4'-Isomeranteil
- Isocyanat 3:: Mischung aus 60% 2,4'-Diphenylmethandiisocyanat und 40% 4,4'-Diphenylmethandiisocyanat (Desmodur^{®} VP.PU 0129 der Firma Bayer MaterialScience AG)
- Caytur® 31 DA:: Mischung aus 47 Gew.-% 4,4'-Diphenylmethandiamin mit NaCl (liegt laut Hersteller als MDA3*NaCl vor) und 53 Gew.-% Dioctyladipat erhältlich von Chemtura Corperation
- Adiprene® Duracast™: C930: monomerenarmes NCO-Prepolymer auf Basis von 4,4'-MDI und Polycaprolactonpolyolen mit einem NCO-Gehalt von 4,35-4,55 Gew.-% und einer Viskosität bei 80°C von 1000 mPas; es handelt sich um ein ABA Prepolymer; im Folgenden als Prepolymer 8 bezeichnet

### Allgemeine Prepolymer-Herstellvorschrift:

In einen Rührkolben wurden die entsprechende Menge Isocyanat auf 50°C erwärmt und mit der entsprechenden Menge der Polyolmischung bei 70°C rasch verrührt. Man ließ für 3 Std. unter Vakuum bei 85°C nachreagieren und bestimmte die Eigenschaften. Da NCO-Gruppen feuchtigkeitsempfindlich sind, wurden allen weiteren Untersuchungen/Versuche, vor allem die Lagerversuche, sofern möglich unter Feuchtigkeitsausschluss durchgeführt (z.B. unter Vakuum oder unter Schutzgasatmosphäre, wie beispielsweise trockene Luft oder trockener Stickstoff).

### Allgemeine Herstellvorschrift zur Herstellung von Elastomerformteilen mit Caytur® 31 DA als Vernetzer:

Das Prepolymer wurde bei 80°C unter langsamem Rühren im Vakuum bis zur Blasenfreiheit entgast. Caytur® 31 DA wurde 24 h bei 30°C vor dessen Einsatz im Fass bewegt. Anschließend wurde die entsprechende Menge bei 25°C dem Prepolymer zugegeben. Es wurde für 5 Minuten entgast. Die Mischung wurde in Formen bei 125 °C gegossen. Das Elastomer wurde entformt und für 16 Std. bei 115°C nachgetempert.

### Allgemeine Herstellvorschrift zur Herstellung von Gießelastomeren mit MOCA als Vernetzer:

Das Prepolymer wurde bei 80°C unter langsamem Rühren im Vakuum bis zur Blasenfreiheit entgast. Moca wurde bei 120°C dem Prepolymer zugegeben. Es wurde unmittelbar in Formen bei 100°C gegossen. Das Elastomer wurde entformt und für 16 Std. bei 100°C nachgetempert.

Die Topfzeit (pot life) wurde bestimmt, indem eine 400 g Mischung aus Prepolymer und Vernetzer hergestellt wurde. Die Topfzeit ist beendet, wenn das Gemisch anfängt zu gelieren.

**Tabelle 1: Rezepturen von MDI-basierten Prepolymeren**

| **Prepolymer** | | **1 (E)** | **2 (E)** | **3 (E)** | **4 (E)** | **5 (V)** | **6 (V)** | **7 (V)** | **8 (V)*** |
|---|---|---|---|---|---|---|---|---|---|
| Polyol 1 | [Gew.-%] | 37,61 | | | | 37,61 | 37,61 | | |
| Polyol 2 | [Gew.-%] | 25,07 | 70,0 | | | 25,07 | 25,07 | 65,7 | |
| Polyol 3 | [Gew.-%] | | | 54,75 | 39,37 | | | | ja |
| Polyol 4 | [Gew.-%] | | | 13,69 | 32,21 | | | | ja |
| Isocyanat 1 | [Gew.-%] | | | | | 37,32 | | | ja |
| Isocyanat 2 | [Gew.-%] | 37,32 | 30,0 | 31,56 | 28,42 | | | 34,3 | |
| Isocyanat 3 | [Gew.-%] | | | | | | 37,32 | | |
| NCO-Gehalt (theoret.) | [Gew.-% NCO] | 5,57 | 4,20 | 5,43 | 4,89 | 5,57 | 5,57 | 6,0 | 4,35-4,55 |
| NCO-Gehalt (exp.) | [Gew.-% NCO] | 5,57 | 4,05 | 5,25 | 4,67 | 5,30 | 5,55 | 5,95 | |
| Prepolymer-Kennzahl | NCO/OH Gruppen | 1,8 | 1,72 | 2,05 | 2,05 | 1,8 | 1,8 | 2,09 | |
| Freies MDI | [Gew.-%] | 3,1 | 1,1 | 5,0 | 4,6 | 6,15 | 5,03 | 6,5 | < 0,1 |
| Viskosität bei 80°C | [mPas] | 900 | 1350 | 1400 | 1600 | 2250 | 1700 | 650 | 1000 |

| | | | | | | | | | |
|---|---|---|---|---|---|---|---|---|---|
| E - gemäß Erfindung; V - Vergleich * Die Werte für Beispiel 8 wurden aus der Literatur entnommen. | | | | | | | | | |

Die Prepolymere 1, 5 und 6 wurden jeweils aus Polytetrahydrofuran und MDI hergestellt und weisen dieselbe Kennzahl und denselben NCO-Gehalt auf. Das erfindungsgemäße Prepolymer 1 wurde auf Basis von reinem 2,4'-MDI hergestellt und hat einen deutlich niedrigeren freien MDI-Anteil sowie eine deutlich niedrigere Viskosität als die Prepolymere 5 und 6. Das erfindungsgemäße Prepolymer 2 hat einen niedrigeren NCO- Gehalt als das Prepolymer 1 mit einer niedrigen Viskosität. Entsprechende Prepolymere mit einem niedrigen NCO-Gehalt analog Prepolymer 2 auf Basis von 4,4'-MDI oder Mischungen aus 4,4'-MDI und 2,4'-MDI ließen sich nicht mehr herstellen, da die Viskosität viel zu hoch war. Die Herstellung von Prepolymeren analog zu den Versuchen 3 und 4 allerdings auf Basis von 4,4'-MDI bzw. Mischungen aus 4,4'-MDI und 2,4'-MDI konnte ebenfalls auf Grund der viel zu hohen Viskositäten nicht realisiert werden. Somit ist die Verwendung von reinem 2,4'-MDI, um Prepolymere mit niedrigem Gehalt an freiem MDI und mit niedriger Viskosität herzustellen, überraschenderweise äußerst vorteilhaft.

Das Prepolymer 7 hat zwar im Vergleich zum Prepolymer 1 eine sehr niedrige Viskosität, allerdings ist die Kennzahl höher und der Gehalt an freiem MDI deutlich höher. Aus diesen Prepolymeren lassen sich keine Elastomerteile mit großen Dicken mehr herstellen, wie im Folgenden gezeigt wird.

**Tabelle 2a: Rezepturen, Herstellung und Eigenschaften von Elastomerformteilen (Einfluss der Temperung)**

| **Rezeptur und Herstellung:** | | | | | | | |
|---|---|---|---|---|---|---|---|
| Prepolymer | Nr. | 3 | 3 | 3 | 8 | 8 | 4 |
| Menge | [Gew.Tle] | 100 | 100 | 100 | 100 | 100 | 100 |
| Caytur® 31DA | [Gew.Tle] | 29,1 | 29,1 | 29,1 | 24,7 | 24,7 | 25,9 |
| Temperatur Caytur® 31DA | [°C] | 25 | 25 | 25 | 25 | 25 | 25 |
| Prepolymertemperatur | [°C] | 80 | 80 | 80 | 90 | 90 | 80 |
| Stöchiometrie Elastomer | | 0,95 | 0,95 | 0,95 | 0,95 | 0,95 | 0,95 |
| Formtemperatur | [°C] | 125 | 125 | 125 | 127-140 | 127-140 | 125 |
| Nachheiztemperatur | [°C] | 100 | 115 | 140 | 127 | 140 | 115 |
| Nachheizzeit | [h] | 24 | 24 | 24 | 24 | 24 | 24 |
| Homogene Eigenschaften über einen Block von 30*30*10 cm³ | | ja | ja | ja | nein | nein | ja |
| Block von 30*30*10 cm³ herstellbar | | ja | ja | ja | ja | ja | ja |
| Aushärtung von Schichten > 10 mm | | ja | ja | ja | ja | ja | ja |

| **mechanische Eigenschaften:** | | | | | | | |
|---|---|---|---|---|---|---|---|
| Härte | [Shore A] | 93 | 93 | 93 | 93-95 | 93-95 | 90 |
| | [Shore D] | | | | | | |
| Spannung 10% | [MPa] | 4,4 | 4,2 | 4,5 | | | 3,6 |
| Spannung 100% | [MPa] | 8,4 | 8,9 | 8,8 | 9,1 | 9,65 | 7,5 |
| Spannung 200% | [MPa] | 10,0 | 10,3 | 10,2 | | | 8,9 |
| Spannung 300% | [MPa] | 12,4 | 12,3 | 12 | 12,76 | 11,72 | 10,7 |
| Reißspannung | [MPa] | 49 | 46 | 45 | 43,44 | 42,05 | 49 |
| Reißdehnung | [%] | 570 | 585 | 615 | 525 | 600 | 585 |
| Weiterreißwiderstand, ungeritzt | [kN/m] | 106 | 108 | 110 | | | 100 |
| Weiterreißwiderstand, geritzt | [kN/m] | 75 | 75 | 78 | | | 63 |
| Weiterreißwiderstand nach ASTM D-1938 | | | | | 57,8 | 81,3 | |
| Stoßelastizität | [%] | 38 | 36 | 35 | 60 | 60 | 42 |
| Abrieb (DIN) | [mm³] | 65 | 60 | 70 | | | 50 |
| Dichte | [g/mm³] | 1,16 | 1,16 | 1,17 | | | 1,16 |
| DVR 20°C/72h | [%] | 27 | 25 | 26 | | | 20 |
| DVR 70°C/22h | [%] | 42 | 42 | 40 | 24 | 23 | 33 |

Die erfindungsgemäßen Elastomere zeigen quasi keine Änderung ihrer Eigenschaften bei verschiedenen Tempermethoden. Elastomere auf Basis 4,4'-MDI aus entsprechenden Prepolymeren, die einer Dünnschichtdestillation unterworfen wurden (Prepolymer 8), weisen eine sehr hohe Weiterreißfestigkeit bei 140°C Nachtemperung auf, die 40% höher ist als die der Elastomere, die bei 127°C nachgetempert wurden. Dies ist umso erstaunlicher, da die Temperatur beim Nachtempern lediglich um 13°C erhöht war. Die erfindungsgemäßen Elastomere zeigen keine Eigenschaftsänderung über einen Temperaturbereich von 100-140°C. Dies ist insbesondere dann von großer Bedeutung, wenn große Teile hergestellt werden müssen. Polyurethan ist ein Isolator, und im Kern des Polyurethanformteils liegen wesentlich höhere Temperaturen vor als an der Oberfläche im Kontakt mit der Form. Beispielsweise kann bei einer Formtemperatur von 100°C im Kern leicht eine Temperatur von 140°C erreicht werden. Die Elastomere aus Prepolymeren, die einer Dünnschichtdestillation unterworfen wurden (Prepolymer 8), weisen keine homogenen Eigenschaften auf.

**Tabelle 2b: Rezepturen, Herstellung und Eigenschaften von erfindungsgemäßen Gießelastomeren (lagerstabile Reaktionsgemische im Vergleich zu nicht lagerstabilen Gemischen (mit MOCA als Aminvernetzer))**

| **Rezeptur und Herstellung:** | | | | | | | | | | | |
|---|---|---|---|---|---|---|---|---|---|---|---|
| Prepolymer | Nr. | 3 | 3 | 3 | 3 | 1 | 1 | 1 | 1 | 2 | 2 |
| | [Gew.Tle] | 100 | 100 | 100 | 100 | 100 | 100 | 100 | 100 | 100 | 100 |
| Caytur® 31DA | [Gew.-Tle] | 29,1 | 29,1 | 29,1 | | 30,9 | 30,9 | 30,9 | | 22,4 | |
| MOCA | [Gew.-Tle] | | | | 15,9 | | | | 16,8 | | 12,2 |
| Temperatur Caytur® 31DA | [°C] | 25 | 25 | 25 | | 25 | 25 | 25 | | 25 | |
| Temperatur MOCA | [°C] | | | | 120 | | | | 120 | | 120 |
| Prepolymertempe ratur | [°C] | 90 | 90 | 90 | 90 | 90 | 90 | 90 | 90 | 80 | 80 |
| Stöchiometrie Elastomer | | 0,95 | 0,95 | 0,95 | 0,95 | 0,95 | 0,95 | 0,95 | 0,95 | 0,95 | 0,95 |
| Topfzeit bei 70°C Prepolymer | | > 3 Monat | > 3 Monat | > 3 Monat | 4 min | > 3 Monat | > 3 Monat | > 3 Monat | 3 min | > 3 Monat | 5 min |
| Topfzeit bei 90°C Prepolymer | | 1 h | 1 h | 1 h | 2 min | 1 h | 1 h | 1 h | 2 min | 1 h | 2 min |
| Topfzeit bei 125°C Prep. | | 8 min | 8 min | 8 min | <1min | 8 min | 8 min | 8 min | <1min | 8 min | <1min |
| Gießansatz nach | [h] | 0 | 7 | 24 | 0 | 0 | 7 | 24 | 0 | 0 | 0 |
| Formtemperatur | [°C] | 125 | 125 | 125 | 110 | 125 | 125 | 125 | 110 | 125 | 110 |
| Nachheiztemp. | [°C] | 115 | 115 | 115 | 115 | 115 | 115 | 115 | 115 | 115 | 115 |
| Nachheizzeit | [h] | 24 | 24 | 24 | 24 | 24 | 24 | 24 | 24 | 24 | 24 |
| Homogene Eigenschaften über einen Block 30*30*10 cm³ | | ja | ja | ja | n.b. | ja | ja | ja | n.b. | ja | n.b. |
| Block (30*30*10 cm³) herstellbar | | ja | ja | ja | ja | ja | ja | ja | ja | ja | ja |
| Aushärtung von Schichten> 10mm | | ja | ja | ja | ja | ja | ja | ja | ja | ja | ja |

| **mechanische Eigenschaften:** | | | | | | | | | | | |
|---|---|---|---|---|---|---|---|---|---|---|---|
| Härte | [Shore A] | 93 | 93 | 93 | 97 | 96 | 96 | 96 | 98 | 92 | 95 |
| | [Shore D] | | | | | 47 | 45 | 45 | 56 | | |
| Spannung 10% | [MPa] | 4,2 | 4,2 | 4,2 | 3,2 | 7,1 | 6,8 | 6,5 | 11,9 | 3,2 | 5,4 |
| Spannung 100% | [MPa] | 8,9 | 8,1 | 9,5 | 6,5 | 12,9 | 12,7 | 12,6 | 20,9 | 6,8 | 11,3 |
| Spannung 200% | [MPa] | 10,3 | 9,7 | 11 | 9,1 | 14,7 | 14,7 | 14,4 | 26,2 | 9,0 | 14,6 |
| Spannung 300% | [MPa] | 12,3 | 11,8 | 13,1 | 13,4 | 17,4 | 17,6 | 16,8 | 32,3 | 11,4 | 18,2 |
| Reißspannung | [MPa] | 46 | 53 | 43 | 54 | 43 | 41 | 40 | 50 | 46 | 38 |
| Reißdehnung | [%] | 585 | 620 | 595 | 496 | 532 | 529 | 545 | 440 | 584 | 500 |
| Weiterreißwiders tand, ungeritzt | [kN/m] | 110 | 106 | 121 | 101 | 130 | 130 | 135 | 161 | 99 | 127 |
| Weiterreißwiders tand, geritzt | [kN/m] | 79 | 74 | 88 | 61 | 87 | 84 | 86 | 131 | 39 | 47 |
| Stoßelastizität | [%] | 36 | 36 | 36 | 31 | 39 | 38 | 35 | 36 | 48 | 37 |
| Abrieb (DIN) | [mm³] | 60 | 65 | 65 | 65 | 65 | 65 | 65 | 40 | 45 | 40 |
| Dichte | [g/mm³] | 1,16 | 1,16 | 1,16 | 1,17 | 1,1 | 1,1 | 1,1 | 1,14 | 1,09 | 1,11 |
| DVR 20°C/72h | [%] | 25 | 27 | 27 | 18 | 25 | 25 | 24 | 23 | 23 | 23 |
| DVR 70°C/22h | [%] | 42 | 43 | 42 | 29 | 34 | 36 | 35 | 24 | 39 | 25 |

Aus Tabelle 2b ist ersichtlich, dass die Reaktionsmischung auf Basis des Prepolymers 3 selbst 24 Stunden nach Vermischung von Caytur® 31 DA und dem Prepolymer noch Prüfkörper mit Eigenschaften liefert, die identisch mit denen sind, die direkt nach der Vermischung hergestellt wurden. Auch zeigte sich, dass die erfindungsgemäß hergestellten Blöcke homogen in ihrer Härte waren und die Reaktionsmischungen ohne Probleme aushärteten. Um die Homogenität zu bestimmen, wurde ein Block durchgeschnitten und jeweils die Härte in der Mitte, oben und unten gemessen. Beträgt der Härteunterschied höchstens eine Shore A Härte, dann spricht man von Homogenität. Mit einem Vernetzer, wie z.B. MOCA, hergestellte Reaktionsgemische haben ein Verarbeitungsfenster von 2 Minuten, wohingegen die erfinungsgemäßen Reaktionsgemische noch nach Monaten gießfähig/fließfähig sind.

**Tabelle 2c: Rezepturen, Herstellung und Eigenschaften von nicht-erfindungsgemäßen Gießelastomeren (Vergleich)**

| **Rezeptur und Herstellung:** | | | | |
|---|---|---|---|---|
| Prepolymer | Nr. | 5 | 6 | 7 |
| | [Gew.Tle] | 100 | 100 | 100 |
| Caytur® 31DA | [Gew.-Tle] | 29,4 | 30,8 | 33,0 |
| Temperatur Caytur® 31DA | [°C] | 25 | 25 | 25 |
| Prepolymertemperatur | [°C] | 90 | 90 | 90 |
| Stöchiometrie Elastomer | | 0,95 | 0,95 | 0,95 |
| Topfzeit bei 70°C Prepolymer | | Fängt nach 24 h an zu gelieren | Fängt nach 24 h an zu gelieren | Fängt nach 24 h an zu gelieren |
| Formtemperatur | [°C] | 125 | 125 | 125 |
| Nachheiztemperatur | [°C] | 115 | 115 | 115 |
| Nachheizzeit | [h] | 16 | 16 | 1 |
| Eigenschaften homogen über einen Block von 30*30*10 cm³ | | Nein | Nein | Nein |
| Block von 30*30*10 cm³ herstellbar | | Es ließ sich kein Block herstellen. Somit wurden die Ansätze verworfen. | | |
| Aushärtung von Schichten > 10 mm | | nein | | |

Anhand der Beispiele ist ersichtlich, dass die Prepolymere nicht nur auf 2,4'-MDI basieren müssen, sondern dass sie auch einen niedrigen Gehalt an freiem MDI aufweisen müssen, um eine Aushärtung in einem Block zu ermöglichen. Somit können Reaktionsgemische aus NCO-Prepolymeren, die aus Mischungen von 2,4'-MDI und 4,4'-MDI hergestellt wurden, die Aufgabe nicht lösen. Auch können Reaktionsgemische auf Basis von NCO-Prepolymeren aus 2,4'-MDI mit mehr als 6 Gew.-% an freiem 2,4'-MDI die Aufgabe nicht lösen.

## Patentansprüche

1. Nach dem Gießverfahren erhältliche Polyurethanelastomerformteile erhältlich durch Umsetzung von
a) NCO-Prepolymeren mit einer Viskosität bei 80°C von < 3000 mPas, mit einem NCO-Gehalt von 3 bis 7 Gew.-% und mit einem Anteil an freiem monomerem 2,4'-Diphenylmethandiisocyanat von 1 Gew.-% bis 6 Gew.-%, bezogen auf das NCO-Prepolymer, erhältlich durch Umsetzung von Diphenylmethandiisocyanat mit einem 2,4'-Isomerengehalt von mindestens 95 Gew.-% und Polyolen mit OH-Zahlen von 50 bis 180 mg KOH/g und einer Funktionalität von 2, wobei die Kennzahl 1,6:1 bis 2,1:1 beträgt, mit
b) Komplexen aus 4,4'-Diaminodiphenylmethan und Metallsalzen,
in Gegenwart von
c) gegebenenfalls Hilfs- und Zusatzstoffen und
d) gegebenenfalls Weichmachern.

2. Verfahren zur Herstellung von Polyurethanelastomerformteilen nach dem Gießverfahren, wobei
(i) in einem ersten Schritt
a) NCO-Prepolymere mit einer Viskosität bei 80°C von < 3000 mPas, mit einem NCO-Gehalt von 3 bis 7 Gew.-% und mit einem Anteil an freiem monomerem 2,4'-Diphenylmethandiisocyanat von 1 Gew.-% bis 6 Gew.-%, bezogen auf das NCO-Prepolymer, erhältlich durch Umsetzung von Diphenylmethandiisocyanat mit einem 2,4'-Isomerengehalt von mindestens 95 Gew.-% und Polyolen mit OH-Zahlen von 50 bis 180 mg KOH/g und einer Funktionalität von 2, wobei die Kennzahl 1,6:1 bis 2,1:1 beträgt, und
b) Komplexe aus 4,4'-Diaminodiphenylmethan und Metallsalzen sowie
c) gegebenenfalls Hilfs- und Zusatzstoffe und
d) gegebenenfalls Weichmacher miteinander vermischt werden,
(ii) gegebenenfalls das unter Schritt (i) erhaltene Reaktionsgemisch bei temperaturen von ≤ 70°C gelagert wird,
(iii) das Reaktionsgemisch in eine Form gegeben wird,
(iv) das Reaktionsgemisch bei Temperaturen von über 80°C bis höchstens 150°C zum Polyurethan ausgehärtet wird,
(v) das ausgehärtete Polyurethan als Formteil aus der Form entnommen wird.

## Claims

1. Polyurethane elastomer moldings obtainable by the casting process, and obtainable via reaction of
a) NCO prepolymers with viscosity <3000 mPas at 80°C, with NCO content of from 3 to 7% by weight and with from 1% by weight to 6% by weight content of free monomeric diphenylmethane 2,4'-diisocyanate, based on the NCO prepolymer, obtainable via reaction of diphenylmethane diisocyanate with at least 95% by weight 2,4'-isomer content and of polyols with OH numbers of from 50 to 180 mg KOH/g and with functionality 2, where the index is from 1.6:1 to 2.1:1, with
b) complexes made of 4,4'-diaminodiphenylmethane and of metal salts,
in the presence of
c) optionally auxiliaries and additives and
d) optionally plasticizers.

2. Method for the production of polyurethane elastomer moldings by the casting process,
where
(i) in a first step
a) NCO prepolymers with viscosity <3000 mPas at 80°C, with NCO content of from 3 to 7% by weight and with from 1% by weight to 6% by weight content of free monomeric diphenylmethane 2,4'-diisocyanate, based on the NCO prepolymer, obtainable via reaction of diphenylmethane diisocyanate with at least 95% by weight 2,4'-isomer content and of polyols with OH numbers of from 50 to 180 mg KOH/g and with functionality 2, where the index is from 1.6:1 to 2.1:1,
b) complexes made of 4,4'-diaminodiphenylmethane and of metal salts,
c) optionally auxiliaries and additives and
d) optionally plasticizers are mixed with one another,
(ii) optionally the reaction mixture obtained in step (i) is stored at temperatures ≤70°C,
(iii)the reaction mixture is charged to a mold,
(iv) the reaction mixture is hardened at temperatures above 80°C up to at most 150°C to give the polyurethane,
(v) the hardened polyurethane is removed in the form of molding from the mold.

## Revendications

1. Pièces moulées en élastomère de polyuréthane pouvant être obtenues par le procédé de coulée, pouvant être obtenues par mise en réaction de :
a) des prépolymères NCO ayant une viscosité à 80 °C < 3 000 mPas, ayant une teneur en NCO de 3 à 7 % en poids et contenant une proportion de diisocyanate de 2,4'-diphénylméthane monomère libre de 1 % en poids à 6 % en poids, par rapport au prépolymère NCO, pouvant être obtenus par mise en réaction de diisocyanate de diphénylméthane ayant une teneur en isomères 2,4' d'au moins 95 % en poids et de polyols ayant des indices OH de 50 à 180 mg KOH/g et une fonctionnalité de 2, l'indice étant de 1,6:1 à 2,1:1, avec
b) des complexes de 4,4'-diaminodiphénylméthane et de sels métalliques,
en présence de
c) éventuellement des adjuvants et des additifs, et
d) éventuellement des plastifiants.

2. Procédé de fabrication de pièces moulées d'élastomère de polyuréthane par le procédé de coulée, selon lequel
(i) lors d'une première étape,
a) des prépolymères NCO ayant une viscosité à 80 °C < 3 000 mPas, ayant une teneur en NCO de 3 à 7 % en poids et contenant une proportion de diisocyanate de 2,4'-diphénylméthane monomère libre de 1 % en poids à 6 % en poids, par rapport au prépolymère NCO, pouvant être obtenus par mise en réaction de diisocyanate de diphénylméthane ayant une teneur en isomères 2,4' d'au moins 95 % en poids et de polyols ayant des indices OH de 50 à 180 mg KOH/g et une fonctionnalité de 2, l'indice étant de 1,6:1 à 2,1:1, et
b) des complexes de 4,4'-diaminodiphénylméthane et de sels métalliques, ainsi que
c) éventuellement des adjuvants et des additifs, et
d) éventuellement des plastifiants, sont mélangés les uns avec les autres,
(ii) le mélange réactionnel obtenu à l'étape (i) est éventuellement entreposé à des températures ≤ 70 °C,
(iii) le mélange réactionnel est introduit dans un moule,
(iv) le mélange réactionnel est durci à des températures de plus de 80 °C à au plus 150 °C pour former le polyuréthane,
(v) le polyuréthane durci est extrait du moule sous la forme d'une pièce moulée.
